# DEMANDE DE BREVET EUROPEEN

(11) **EP 1 944 627 A2**
(43) Date de publication de la demande: **16.07.2008**
(21) Numéro de dépôt: 08290024.2
(22) Date de dépôt: 11.01.2008
(51) Int. Cl.: G01W 1/16, G01R 29/12, H02G 13/00

(54) **Réseau de surveillance d'événements orageux et procédés correspondants**

(30) Priorité: 12.01.2007 FR 0700229
(71) Demandeur: ABB France, 92566 Rueil-Malmaison Cedex (FR)
(72) Inventeur: Serrie, Gérard, 65350 Lansac (FR)
(74) Mandataire: Reinhardt, Yves

(57) **Abrégé**

La station de surveillance d'événements orageux (S1), comprend un moyen d'évaluation du champ électrique (2) conçu pour fournir un signal image (E1_{MES}) du champ électrique atmosphérique (E1) qui règne au voisinage de ladite station (S1.). Ce moyen d'évaluation du champ électrique (2) est pourvu d'un conducteur aérien (15) placé au contact de l'atmosphère qui environne la station (S1) correspondante, le conducteur aérien (15) formant un moyen de capture de foudre (22) relié à un conducteur d'écoulement (24) apte à écouler vers la terre le courant de foudre généré par un foudroiement dudit moyen de capture. Le moyen de capture de foudre (220) peut faire partie d'un dispositif de protection (23) d'un édifice (20), tel qu'un paratonnerre.

## Description

La présente invention concerne les installations destinées à être implantées dans une zone géographique déterminée afin d'observer des paramètres météorologiques, en vue de détecter l'apparition de conditions orageuses dans la zone concernée et/ou de surveiller l'évolution desdites conditions orageuses.
La présente invention concerne plus particulièrement une installation de surveillance d'événements orageux.
La présente invention concerne également une station de surveillance d'évènements orageux.
La présente invention concerne également une nouvelle utilisation d'un dispositif de protection d'un édifice contre les surtensions de type paratonnerre à dispositif d'amorçage (PDA).
La présente invention concerne également un procédé de surveillance d'évènements orageux.
La présente invention concerne enfin un procédé de mesure d'un champ électrique atmosphérique.

Il est connu que les évènements orageux, en raison des décharges de foudre qui les accompagnent, peuvent causer des dommages importants aux bâtiments et infrastructures de transport de biens, de personnes, d'informations ou d'énergie.
En particulier, il est connu que les effets directs ou indirects du foudroiement sont préjudiciables aux équipements électriques et surtout électroniques dont les composants sont particulièrement sensibles aux variations de champ électromagnétique et aux surtensions provoquées par la foudre.
Il est par conséquent connu d'équiper les bâtiments et autres types d'édifices de dispositifs de protection contre la foudre destinés à capter les décharges électriques aériennes afin d'écouler le courant résultant à la terre dans laquelle l'énergie de la décharge se dissipe.

Toutefois, de tels dispositifs n'opèrent que curativement c'est-à-dire qu'ils minimisent les effets d'un foudroiement subi après apparition de ce dernier.
Par conséquent, les dispositifs de protection contre la foudre connus ne permettent au mieux de réaliser qu'un constat tardif, a *posteriori,* de la survenance des événements orageux, sans offrir à l'usager du bâtiment la possibilité de prédire lesdits évènements et, par exemple, de déconnecter préventivement les installations sensibles.

Les objets assignés à la présente invention visent par conséquent à remédier aux inconvénients susmentionnés et à proposer une nouvelle installation de surveillance d'évènements orageux aptes à détecter précocement l'apparition de conditions orageuses et à en surveiller l'évolution.

Un autre objet assigné à l'invention vise à proposer une installation de surveillance qui soit particulièrement précise et fiable.

Un autre objet de l'invention vise à proposer une nouvelle installation de surveillance qui soit de conception simple, robuste et peu onéreuse.

Un autre objet de l'invention vise à propose une nouvelle installation de surveillance offrant une protection efficace à la fois préventivement et curativement contre la foudre.

Les objets assignés à la présente invention visent également à proposer une nouvelle installation de surveillance dont la mise en oeuvre puisse être réalisée à l'aide de composants standard.

Un autre objet de l'invention vise également à proposer une nouvelle installation de surveillance d'évènements orageux qui soit facilement accessible et exploitable par un utilisateur quelconque.

La présente invention vise en outre à proposer une nouvelle installation de surveillance particulièrement robuste et peu sensible aux perturbations provoquées par la foudre ou à d'éventuels dysfonctionnements affectant une partie de ses éléments constitutifs.

Un autre objet de l'invention vise à proposer une nouvelle station de surveillance d'évènements orageux qui permette une détection précoce et un suivi efficace de tels évènements orageux.

Un autre objet assigné à l'invention vise à proposer une nouvelle station de surveillance qui offre une protection contre la foudre tant préventive que curative.

Un autre objet assigné à l'invention vise à proposer une nouvelle station de surveillance qui soit de conception particulièrement simple, compacte, et robuste.

Un autre objet assigné à l'invention vise à proposer une nouvelle station de surveillance peu coûteuse à mettre en place et dont la réalisation nécessite un faible nombre de composants, issus de gammes disponibles en standard.

Les objets assignés à l'invention visent également à proposer une nouvelle utilisation de dispositifs de protection contre la foudre de type paratonnerres à dispositif d'amorçage.

La présente invention vise également à proposer un nouveau procédé de surveillance d'évènements orageux qui permette une détection précoce et simple ainsi qu'un suivi efficace de tels évènements orageux.

Un objet de l'invention vise également à proposer un procédé de surveillance qui soit adapté à des configurations d'installations très diverses et qui soit peu sensible aux perturbations.

La présente invention concerne enfin un nouveau procédé de mesure d'un champ électrique atmosphérique qui soit particulièrement simple à mettre en oeuvre, notamment en rattrapage sur des installations existantes de protection contre la foudre.

Les objets assignés à l'invention sont atteints à l'aide d'une station de surveillance d'évènements orageux, comprenant un moyen d'évaluation du champ électrique conçu pour fournir un signal image du champ électrique atmosphérique qui règne au voisinage de ladite station. Ledit moyen d'évaluation du champ électrique peut être avantageusement pourvu d'un conducteur aérien placé au contact de l'atmosphère qui environne la station, le conducteur aérien formant un moyen de capture de foudre relié à un conducteur d'écoulement apte à écouler vers la terre le courant de foudre généré par un foudroiement dudit moyen de capture. Par ailleurs, la station de surveillance peut avantageusement comprendre un module de communication conçu pour rendre accessible ledit signal depuis l'extérieur de ladite première station, ou le transmettre à partir de cette dernière.

Les objets assignés à la présente invention sont aussi atteints à l'aide d'une installation de surveillance d'événements orageux , comprenant :
- une première station comportant d'une part un premier moyen d'évaluation du champ électrique conçu pour fournir un premier signal image du champ électrique atmosphérique qui règne au voisinage de ladite première station, et d'autre part un premier module de communication conçu pour rendre accessible ledit premier signal depuis l'extérieur de ladite première station, ou le transmettre à partir de cette dernière,
- au moins une seconde station, distante de la première station, comportant d'une part un second moyen d'évaluation du champ électrique conçu pour fournir un second signal image du champ électrique atmosphérique qui règne au voisinage de ladite station, et d'autre part un second module de communication conçu pour rendre accessible ledit second signal depuis l'extérieur de ladite seconde station, ou le transmettre à partir de cette dernière,
- une unité de collecte, distante de la première et/ou de la seconde station, ladite unité de collecte étant connectée d'une part au premier module de communication et d'autre part au second module de communication au moyen d'un réseau de connexions de sorte à pouvoir accéder au premier et au second signal ou recevoir ces derniers,
- une unité de traitement, associée fonctionnellement à l'unité de collecte et apte à traiter le premier et le second signal en vue d'apprécier l'apparition et/ou l'évolution de conditions atmosphériques orageuses dans la zone géographique qui correspond sensiblement aux sites d'implantation des première et seconde stations.
Au moins l'une desdites stations peut être avantageusement conçue conformément à une station de surveillance d'évènements orageux telle que définie plus haut.

Les objets assignés à l'invention sont également atteints à l'aide d'une nouvelle utilisation d'un dispositif de protection d'un édifice contre les surtensions, de type paratonnerre à dispositif d'amorçage (PDA), en tant que moyen d'évaluation du champ électrique atmosphérique régnant au voisinage dudit édifice par fourniture d'un signal image dudit champ électrique atmosphérique sur la base d'une mesure de la fréquence des impulsions délivrées par un moyen d'activation dudit dispositif de protection.

Les objets assignés à l'invention sont également atteints à l'aide d'un procédé de surveillance d'évènements orageux, comportant une étape (a) de mise en réseau au cours de laquelle on relie fonctionnellement au moins deux stations distantes l'une de l'autre, aptes à évaluer chacune le champ électrique atmosphérique qui les environne et à en fournir un signal image, à une unité de collecte, une étape (b) d'interrogation au cours de laquelle on accède, au moyen de ladite unité de collecte, aux signaux images fournis par les stations et une étape (c) de traitement au cours de laquelle on analyse lesdits signaux afin de déterminer l'apparition et/ou l'évolution de conditions orageuses dans la zone géographique qui correspond aux sites d'implantation desdites stations. Là-aussi, au moins l'une des stations peut être avantageusement conçue conformément à une station de surveillance d'évènements orageux telle que définie plus haut.

Les objets assignés à l'invention sont enfin atteints à l'aide d'un procédé de mesure d'un champ électrique atmosphérique, comprenant une étape (i) d'installation au cours de laquelle on installe une station pourvue d'un conducteur aérien que l'on place au contact de l'atmosphère qui environne la station correspondante, puis une étape (ii) de raccordement au cours de laquelle on relie électriquement audit conducteur aérien un circuit électronique oscillant dont la fréquence d'oscillation dépend de la différence de potentiel entre ledit conducteur aérien et un potentiel de référence, tel que celui d'une prise de terre, puis une étape (iii) de mesure au cours de laquelle on mesure la fréquence d'oscillation dudit circuit oscillant, et enfin une étape (iv) de corrélation au cours de laquelle on évalue, selon une loi théorique ou empirique prédéterminée, l'intensité du champ électrique en fonction de la valeur mesurée de fréquence d'oscillation.

D'autres objets, caractéristiques et avantages de l'invention apparaîtront plus en détails à la lecture de la description qui suit, ainsi qu'à l'aide des dessins annexés, fournis à titre purement illustratif et non limitatif, parmi lesquels :
- La figure 1 illustre, selon une vue schématique, une variante de réalisation d'installation de surveillance d'événements orageux conforme à l'invention.
- La figure 2 représente un diagramme illustrant le comportement d'un circuit oscillant conforme à l'invention en fonction du champ électrique atmosphérique.
- La figure 3 illustre, selon une vue schématique avec coupe partielle, une variante de réalisation d'une station de surveillance d'évènements orageux conforme à l'invention.
- La figure 4 représente un exemple de schéma électrique de réalisation d'un circuit oscillant pouvant être intégré à une station de surveillance conforme à l'invention.
- La figure 5 illustre, selon une vue en perspective simplifiée, un exemple de mise en oeuvre d'une station de surveillance conforme à l'invention.

La présente invention concerne une installation 1 de surveillance d'événements orageux.

Par « *évènements orageux* », on désigne l'apparition de nuages chargés qui modifient, et plus particulièrement augmentent, l'intensité du champ électrique atmosphérique dans la zone géographique considérée, lesdits nuages chargés étant susceptibles de provoquer l'apparition de phénomènes de foudre, c'est-à-dire de décharges aériennes entre lesdits nuages et la terre, et plus particulièrement sur les reliefs naturels ou les édifices construits par l'homme.

Par *«édifice* », on désigne indifféremment des bâtiments à usage industriel, commercial, ou d'habitation, des monuments, des ouvrages d'art et de génie civil, ou encore des infrastructures de transport de biens, de personnes, d'informations ou d'énergie.

Selon l'invention, ladite installation 1 comprend une première station S1 qui comporte d'une part un premier moyen d'évaluation du champ électrique 2 conçu pour fournir un premier signal image E1_{MES} du champ électrique atmosphérique E1 qui règne au voisinage de ladite première station S1, et d'autre part un premier module de communication 3 conçu pour rendre accessible ledit premier signal E1_{MES} depuis l'extérieur de ladite première station S1, ou le transmettre à partir de cette dernière.

Par *«évaluation du champ électrique»* on désigne la mesure d'une grandeur physique quelconque dont la valeur dépend dudit champ électrique et permet d'estimer l'intensité de celui-ci. Une telle évaluation peut par exemple être réalisée à l'aide d'un capteur capacitif dont l'une des plaques est placée au contact de l'atmosphère à sonder, ou encore à l'aide d'un *«moulin à champ* ».

Il est à ce titre remarquable que le moyen d'évaluation du champ électrique conforme à l'invention est apte à mesurer l'intensité du champ électrique ambiant au voisinage du sol, c'est-à-dire dans une plage d'altitude dans laquelle les phénomènes de foudre peuvent être dommageables aux activités humaines, et plus précisément dans une plage d'altitude comprise entre le niveau du sol et quelques mètres, voire quelque dizaines de mètres, au-dessus du plus haut édifice établi sur ledit sol dans la zone géographique considérée.

En outre, la mesure et le suivi de l'évolution de l'intensité du champ électrique ambiant par le moyen d'évaluation conforme à l'invention est avantageusement réalisée même en l'absence de décharge électrique aérienne effective (éclair).

Selon l'invention, l'installation 1 comprend au moins une seconde station S2, distante de la première station S1, qui comporte d'une part un second moyen d'évaluation du champ électrique 4 conçu pour fournir un second signal image E2_{MES} du champ électrique atmosphérique E2 qui règne au voisinage de ladite seconde station S2, et d'autre part un second module de communication 5 conçu pour rendre accessible ledit second signal E2_{MES} depuis l'extérieur de ladite seconde station S2, ou le transmettre à partir de cette dernière.

Par *«distante* », on n'indique que la seconde station n'est pas implantée au même endroit que la première station, et que lesdites stations sont séparées physiquement par une distance qui peut aller de quelques mètres à quelques kilomètres voire quelque centaines ou milliers de kilomètres.

Selon l'invention, l'installation 1 comprend en outre une unité de collecte 10 distante de la première et/ou de la seconde station S1, S2, ladite unité de collecte 10 étant connectée d'une part au premier module de communication 3 et d'autre part au second module de communication 5 au moyen d'un réseau de connexions 11 de sorte à pouvoir accéder au premier et au second signal E1_{MES}, E2_{MES} ou recevoir ces derniers.

De plus, l'installation 1 conforme à l'invention comprend une unité de traitement 12 associée fonctionnellement à l'unité de collecte 10 et apte à traiter le premier et le second signal E1_{MES}, E2_{MES} en vue d'apprécier l'apparition et/ou l'évolution de conditions atmosphériques orageuses dans la zone géographique 14 qui correspond sensiblement aux sites d'implantation des première et seconde stations S1, S2.

L'expression *«associée fonctionnellement»* indique que les unités de traitement et de collecte sont en liaison, notamment électrique, et capables de transférer entre elles les informations portées par les signaux concernés. Le cas échéant, lesdites unités peuvent être intégrées au sein d'un même sous-ensemble.

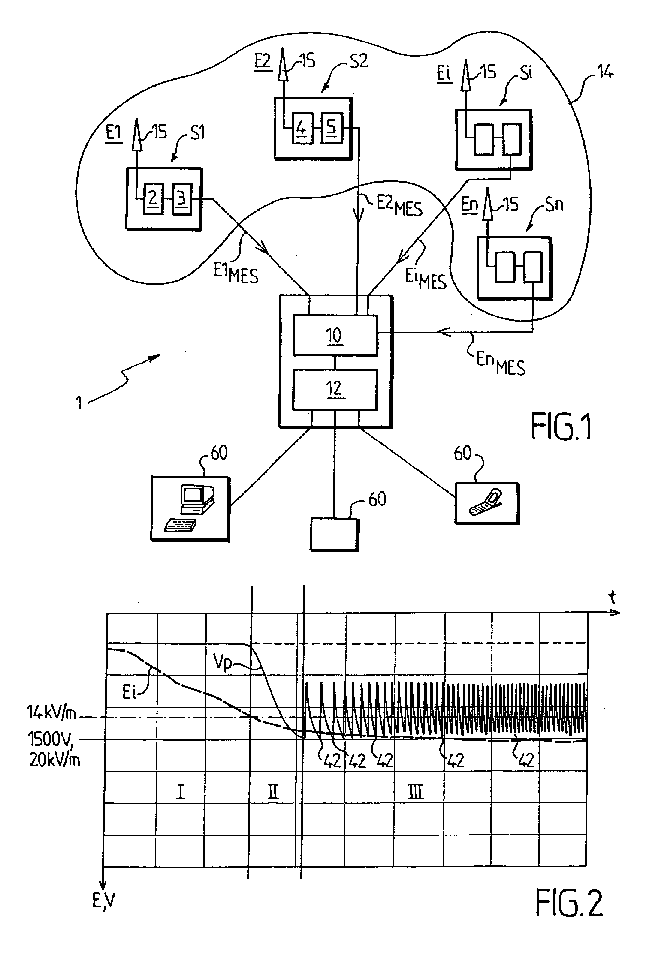

De préférence, l'installation de surveillance 1 comporte une pluralité de stations S1,..., Si... Sn, avec n étant un entier supérieur ou égal à 2 et de préférence strictement supérieur à 2, lesdites stations étant implantées à distance les unes des autres sur une zone géographique 14 donnée, chacune desdites stations étant reliée à l'unité de collecte 10 afin de former un maillage de ladite zone géographique 14, tel que cela est illustré sur la figure 1.

En particulier, les stations peuvent être réparties à l'échelle d'un bâtiment et constituer ainsi un micro-réseau local, ou encore à l'échelle d'une ville, d'un département, d'un pays, voire d'un continent.

Bien entendu, selon l'invention, il est parfaitement envisageable de créer plusieurs micro-réseaux locaux correspondant chacun à un bâtiment ou un groupe de bâtiments proches les uns des autres, par exemple au sein d'un complexe industriel ou d'un hôpital, chaque micro-réseau disposant de sa propre unité de collecte locale (unité de collecte de premier niveau) ainsi que d'outils de gestion et/ou de consultation dudit micro-réseau et des signaux fournis par les stations qui le constituent, lesdits micro-réseaux étant quant à eux interconnectés de manière à former un macro-réseau, par exemple au moyen d'une unité de collecte centrale (unité de collecte de second niveau) à laquelle sont connectées toutes les unités de collecte locales.

Bien entendu, il est envisageable de multiplier ainsi les niveaux hiérarchiques de ramification du réseau formant l'installation 1.

En outre, la nature du réseau de connexions 11 pourra différer en fonction de l'étendue du réseau (donc de la distance de transmission des données) et de l'accessibilité des stations. L'utilisateur pourra notamment opter pour des câbles électriques, des fibres optiques, ou encore une transmission hertzienne par exemple.

Ainsi, l'installation 1 de surveillance conforme à l'invention permet avantageusement de sonder les conditions atmosphériques au voisinage d'une pluralité de capteurs répartis sur un territoire considéré, et plus particulièrement fournir des signaux image Elₘₑₛ, ... Eiₘₑₛ, ... Enₘₑₛ des champs électriques atmosphériques E1, ... Ei, ... En qui règnent au voisinage desdites stations S1, ... Si, ... Sn.

En d'autres termes, l'installation 1 conforme à l'invention permet avantageusement d'utiliser les stations comme autant de points de mesure discrets formant les noeuds d'un réseau de mesure couvrant la zone géographique 14.

Il est remarquable qu'une telle installation 1 est potentiellement évolutive et pourra facilement être étendue en implantant de nouvelles stations dans de nouvelles zones géographiques et en interconnectant le ou les nouveaux réseaux au(x) réseau(x) préexistant(s).

En outre, la résolution de la mesure de champ électrique peut être affinée en augmentant la densité spatiale d'implantation des stations dans une même zone géographique 14, c'est-à-dire en connectant de nouvelles stations implantées dans ladite zone géographique à l'unité de collecte 10.

Bien entendu, la densité du maillage par les stations sera notamment dictée par des impératifs climatiques (fréquence des orages dans une région) et économiques (coût de l'installation, notamment en comparaison de l'impact économique d'un foudroiement dans la zone considérée).

Par commodité de description, on considérera dans la suite du texte une station (S1) en particulier, étant entendu que chacune des stations peut présenter une combinaison partielle ou totale des caractéristiques décrites ci-après. De préférence, toutes les stations seront sensiblement identiques, au moins à l'échelle d'un micro-réseau c'est-à-dire jusqu'au premier niveau d'unité de collecte 10, notamment du point de vue de leurs modules de communication, de manière à pouvoir constituer un réseau homogène pouvant partager un même support et un même protocole d'échange de données.

Par ailleurs, il est parfaitement envisageable que l'unité de collecte 10 soit intégrée à l'une des stations, voire que chaque station dispose de sa propre unité de collecte de telle sorte que chaque station soit à même, le cas échéant, de dialoguer directement avec n'importe quelle autre station du réseau. Un tel agencement permettrait notamment de pallier, le cas échéant, un dysfonctionnement momentané de l'une ou l'autre des stations.

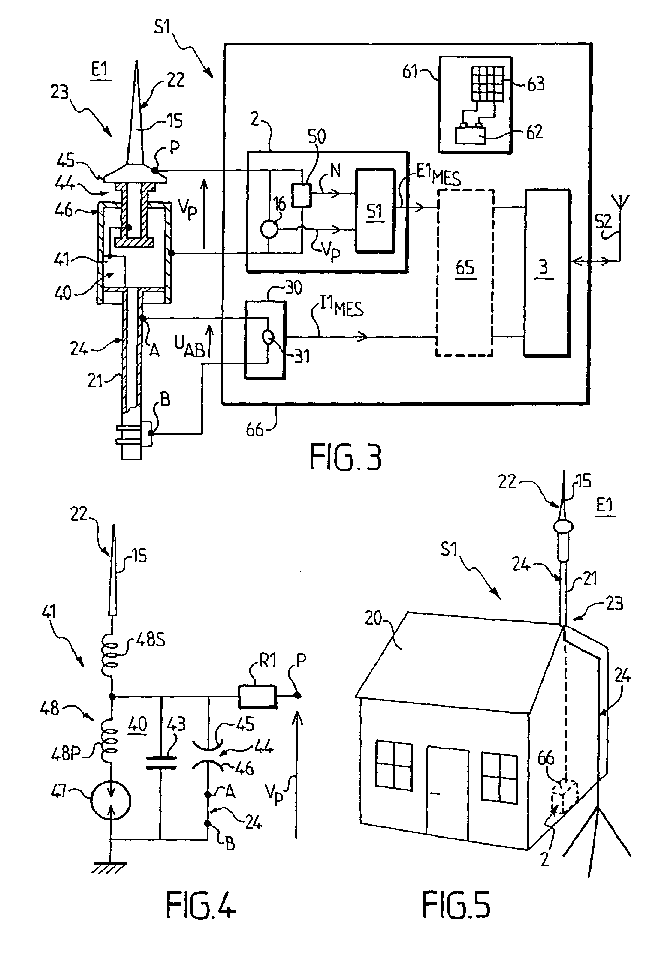

Tel que cela est illustré notamment sur les figures 1 et 3, au moins un moyen d'évaluation du champ électrique 2 est pourvu d'un conducteur aérien 15 placé au contact de l'atmosphère qui environne la station S1 correspondante, ainsi que d'un instrument de mesure de tension 16, tel qu'un voltmètre, apte à évaluer le potentiel électrique V_{P} auquel se trouve ledit conducteur aérien 15.

Plus précisément, l'instrument de mesure de tension 16 est connecté entre le conducteur aérien 15 et un point de référence, de préférence relié à la terre, de manière à pouvoir estimer la différence de potentiel qui existe entre ledit conducteur aérien 15 et un potentiel de référence, tel que celui d'une prise de terre.

De préférence, le conducteur aérien 15 est placé en un point surélevé par rapport au sol, de sorte à baigner dans le champ électrique atmosphérique.

En particulier, un tel conducteur aérien 15 peut être formé par une pièce métallique placée au sommet d'un édifice 20, éventuellement juchée au sommet d'un mât 21.

De façon particulièrement préférentielle, tel que cela est illustré sur les figures 3 à 5, le conducteur aérien 15 forme un moyen de capture de foudre 22 qui appartient à un dispositif de protection contre la foudre 23 d'un édifice 20, tel qu'un paratonnerre, ledit dispositif de protection 23 étant destiné à capter des impacts directs de foudre au niveau dudit moyen de capture 22 puis à acheminer, depuis lesdits moyens de captures 22 vers la terre, au moyen d'un ou plusieurs conducteurs d'écoulement 24, le courant de foudre qui résulte desdits impacts.

Plus précisément, le conducteur aérien 15 peut former la pointe de capture 20 d'un paratonnerre.

Ainsi, l'installation conforme à l'invention peut avantageusement cumuler une fonction préventive selon laquelle on détecte les modifications du champ électrique ambiant de manière à anticiper l'apparition d'un phénomène orageux, et une fonction curative selon laquelle l'installation est en mesure d'intercepter les décharges de foudre et de dissiper leur énergie en préservant l'intégrité des édifices 20 protégés, ainsi que de leurs éventuels occupants ou les équipements qui s'y trouvent installés.

En outre, tel que cela est illustré sur la figure 3, la ou les stations dans lesquelles le conducteur aérien 15 forme un moyen de capture 22 peuvent comporter un moyen d'évaluation du courant de foudre 30 apte à évaluer les caractéristiques du courant de foudre qui traverse le dispositif de protection 23 correspondant, lorsque le conducteur aérien 15 est foudroyé.

A titre d'exemple, le moyen d'évaluation du courant de foudre 30 pourra comporter un capteur inductif torique enfilé autour du conducteur d'écoulement 24 afin de relever et de quantifier les caractéristiques du courant de foudre, telles que son intensité ou sa forme d'onde.

Toutefois, selon une variante de réalisation particulièrement préférentielle illustrée sur la figure 3, le moyen d'évaluation du courant de foudre 30 comprend un moyen d'évaluation de tension 31, tel qu'un voltmètre qui est raccordé électriquement, et de préférence directement, audit conducteur d'écoulement 24 de sorte à pouvoir mesurer la tension U_{AB} qui apparaît entre les bornes A, B d'un tronçon [AB], dit « *tronçon d'épreuve* », dudit conducteur d'écoulement 24 lorsque ce dernier est parcouru par le courant de foudre.

Ainsi, le moyen d'évaluation du courant de foudre 30 peut exploiter l'impédance propre, et notamment la résistance propre, du conducteur d'écoulement 24 pour convertir le courant de foudre en un signal image I1_{MES} dudit courant de foudre. Un tel agencement est particulièrement simple et peu onéreux à mettre en oeuvre et contribue avantageusement à préserver la capacité d'écoulement du dispositif de protection contre la foudre 23 en préservant le conducteur d'écoulement 24 de toute modification structurelle qui serait de nature à perturber l'écoulement du courant de foudre.

Par ailleurs, selon une variante de réalisation préférentielle, au moins l'un des moyens d'évaluation du champ électrique 2 comprend un circuit électronique oscillant 40 dont la fréquence d'oscillation N est variable et dépend de l'intensité du champ électrique atmosphérique E1 auquel est soumis la station correspondante S1.

Plus précisément, ledit circuit électrique oscillant 40 est sensible à la différence de potentiel V_{P} qui existe entre le conducteur aérien 15 et un potentiel de référence tel que celui de la terre, et réagit aux variations de cette différence de potentiel en modifiant sa fréquence d'oscillation en fonction de la valeur de ladite différence de potentiel V_{P}.

De préférence, l'instrument de mesure de tension 16 est associé à une résistance d'isolement R1 de valeur élevée, par exemple supérieure ou égale à 10 MΩ (Mégaohms), de sorte à ne pas perturber le fonctionnement du circuit oscillant 40.

Selon une variante de réalisation particulièrement préférentielle illustrée sur les figures 3 et 4, le circuit électronique oscillant 40 constitue un moyen d'activation 41 du dispositif de protection contre la foudre 23, apte à générer des impulsions de tension 42 et à les appliquer au conducteur aérien 15 afin d'augmenter, en valeur absolue, le potentiel de ce dernier et ainsi améliorer le pouvoir de capture dudit dispositif de protection contre la foudre 23.

Selon cette variante de réalisation, le dispositif de protection contre la foudre 23 constitue un dispositif de protection activable tel qu'un paratonnerre à dispositif d'amorçage (PDA).

De façon connue, un tel moyen d'activation 41 a pour fonction de faire apparaître une excitation électronique, voire une ionisation, de l'air au voisinage du moyen de capture 22, connue sous le nom d' *«effet Corona*», afin de faciliter la création d'un canal ionisé et l'apparition de traceurs ascendants depuis le moyen de capture 22, lesdits traceurs ascendants étant aptes à intercepter les traceurs descendants issus des nuages chargés.

Un exemple de circuit oscillant 40 formant un moyen d'activation 41 est illustré sur la figure 4.

Un tel circuit oscillant 40 peut notamment comprendre un condensateur 43 branché en parallèle aux bornes d'un éclateur d'écoulement 44 dont la première électrode correspond au moyen de capture 22, et plus particulièrement à la collerette située à la base de la pointe de capture du paratonnerre, et dont la seconde électrode 46 est reliée à la terre par l'intermédiaire du conducteur d'écoulement 24, ladite seconde électrode 46 étant de préférence formée par un boîtier conducteur de type cloche fixé à la pointe du mât 21 et abritant le moyen d'activation 41. Ledit éclateur d'écoulement 44 a pour fonction de s'amorcer quasi-instantanément lorsque le moyen de capture 22 est foudroyé de sorte à permettre l'écoulement du courant de foudre, sous forme d'un arc électrique, entre la première et la seconde électrode.

Par ailleurs, le condensateur 43 est branché en parallèle à une branche comprenant un éclateur à gaz 47 monté en série avec le circuit primaire 48P d'un transformateur 48, dont le circuit secondaire 48S est raccordé au moyen de capture 22. Ainsi, l'intensité du champ électrique augmente, l'augmentation résultante du potentiel du moyen de capture 22 qui en résulte entraîne la charge du condensateur 43. Lorsque la tension aux bornes du condensateur 43 atteint la tension d'amorçage de l'éclateur à gaz 47, ledit condensateur 43 se décharge dans le primaire 48P du transformateur et convertit l'impulsion de courant en une impulsion de tension appliquée au moyen de capture 22 qui est raccordé au secondaire 48S.

Une fois le condensateur 43 déchargé, un nouveau cycle de charge s'amorce et ainsi de suite.

Or, les inventeurs ont découvert que le cycle de charge et de décharge du condensateur 43 à travers l'éclateur à gaz 47 se répète selon une fréquence variable qui dépend non seulement du dimensionnement des composants du circuit 40, mais surtout de l'intensité du champ électrique ambiant, et plus précisément de la différence de potentiel entre les électrodes 45 et 46 de l'éclateur 44 (autrement dit de la différence de potentiel V_{P}).

Ainsi, le moyen d'évaluation du champ électrique 2 peut avantageusement comprendre un instrument de mesure de fréquence 50 apte à mesurer la fréquence d'oscillation N du circuit électronique oscillant 40, ladite fréquence N reflétant la valeur de l'intensité du champ électrique E1.

Selon l'invention, le moyen d'évaluation du champ électrique 2 comprend donc de préférence un module de corrélation 51 apte à associer, aux valeurs mesurées de potentiel du conducteur aérien V_{P} et/ou de fréquences d'oscillation N du circuit oscillant 40, une valeur estimée de champ électrique qui forme le signal image E1_{MES}.

A cet effet, ledit module de corrélation 51 peut contenir un modèle mathématique théorique et/ou une base de données empirique permettant de corréler à un couple de valeurs (Vₚ, N) une valeur estimée de champ électrique E1_{MES}.

Plus précisément, le modèle utilisé par le module de corrélation 51 peut être issu de courbes telles que celles représentées sur la figure 2.

Sur ladite figure 2, on a superposé la représentation graphique d'une part de l'intensité du champ électrique atmosphérique E1 (en trait mixte) auquel on expose le conducteur aérien 15 en fonction du temps, et d'autre part, dans la même base de temps, la représentation graphique de la tension V_{P} (en trait plein).

La superposition des courbes de tension et d'intensité du champ électrique fait apparaître trois domaines distincts :
- dans le domaine I, l'intensité du champ électrique atmosphérique augmente progressivement à partir d'un niveau qui est de l'ordre de quelques centaines de volts par mètre et qui correspond au champ atmosphérique par beau temps, pour atteindre une valeur de l'ordre de 14 kV/m à 15 kV/m. Dans cette première phase, le circuit oscillant ne réagit pas et la tension aux bornes 45, 46 de l'éclateur de descente 44 reste sensiblement nulle.
- Dans le domaine II, lorsque l'intensité du champ électrique E1 atteint et dépasse une valeur de l'ordre de 14 kV/m à 15 kV/m, le condensateur 43 se charge progressivement tandis que la tension V_{P} augmente. Il est remarquable que cette montée en tension peut, en l'occurrence, être sensiblement modélisée par une fonction linéaire.
- Le passage dans le domaine III correspond au basculement de l'éclateur à gaz 47 dans son état passant, c'est-à-dire à la décharge du condensateur 43 dans le circuit primaire 48P du transformateur et au départ du cycle d'oscillation du circuit 40, tandis que l'intensité du champ électrique atteint une valeur voisine de 17 kV/m qu'il dépasse ensuite pour tendre sensiblement vers un plateau de très faible pente situé au voisinage de 20 kV/m. Il est alors remarquable que plus l'intensité du champ électrique ambiant est élevée, plus les impulsions de tension 42 excitatrices délivrées par le moyen d'activation 41 sont rapprochées. Dans ce domaine III, il est par conséquent possible d'évaluer l'intensité du champ électrique atmosphérique en mesurant la fréquence de délivrance desdites impulsions de tension 42.

En pratique, les inventeurs ont constaté que la fréquence d'oscillation d'un moyen d'activation 41 typique utilisé sur un PDA est de l'ordre de 3 Hz pour des valeurs d'intensité de champ électrique atmosphérique de l'ordre de 14 kV/m et atteint environ 70 Hz pour des valeurs d'intensité de champ supérieures ou égales à 20 kV/m, ces dernières correspondant aux conditions propices à l'apparition d'un éclair.

Il est ainsi envisageable de prévoir que l'installation puisse déclencher deux niveaux d'alertes successifs à l'attention de l'utilisateur :
- une pré-alerte qui correspond au franchissement par la tension V_{P} d'un seuil d'amplitude prédéterminée, tandis que l'on se trouve dans le domaine II, c'est-à-dire que les conditions atmosphériques sont susceptibles d'évoluer vers des conditions orageuses, mais ne sont pas encore critiques,
- une alerte d'imminence d'orage basée sur l'analyse de la fréquence d'oscillation du circuit électronique 40 lorsque l'on se trouve dans le domaine III, c'est-à-dire que la probabilité de foudroiement est particulièrement élevée.

Par ailleurs, l'unité de traitement 12 comprend de préférence un moyen de mesure du temps, de type horloge, qui permet d'horodater les signaux reçus des stations.

En outre, l'unité de traitement 12 comprend de préférence un module de suivi apte à comparer entre elles différentes valeurs de champ électrique Ei_{MES} reçues successivement dans le temps en provenance d'une même station Si, afin de déterminer l'évolution des conditions orageuses dans la zone géographique concernée, et plus précisément d'estimer si un orage approche ou s'éloigne de ladite station Si (i = 1..n).

En particulier, le module de suivi pourra fournir des résultats sous forme de cartographie de la zone géographique 14 en reportant sur le tracé de ladite zone, par exemple à l'aide d'une échelle de couleurs en surimpression et/ou de légendes symboliques ou textuelles, les intensités de champ électrique atmosphérique relevées par chaque station (cartographie statique) et/ou leur tendance d'évolution dans le temps, à la baisse, à la hausse ou au maintien (cartographie dynamique). Le module de suivi pourra disposer à cet effet d'un module de visualisation ou à tout le moins d'un élément de conditionnement apte à conditionner ses résultats sous un format de fichier affichable sur un ordinateur.

De préférence, l'échantillonnage de la collecte des signaux correspondant aux mesures effectuées au niveau des stations sera compatible avec un rafraîchissement périodique prédéterminé des données par l'unité de traitement (et donc des cartographies proposées par le module de suivi), la périodicité dudit rafraîchissement étant de préférence inférieure à l'heure, voire inférieure à la minute, voire quasiment nulle (suivi en temps réel).

Ainsi, il est envisageable que le module de suivi applique une ou plusieurs analyses statistiques aux données en provenances des différentes stations afin d'établir un historique, voire des prévisions sous forme d'un bulletin permettant d'anticiper l'évolution des conditions orageuses dans ladite zone géographique 14.

Par ailleurs, au sein de l'installation 1, au moins l'un des modules de communication 3 ainsi que l'unité de collecte 10 disposent de préférence de moyens informatiques qui permettent la transmission des signaux entre ledit module de communication 3 et ladite unité de collecte 10 par un réseau informatique de type Internet.

De façon bien connue, de tels moyens informatiques peuvent notamment comprendre un ordinateur de type PC pourvu d'un modem.

En outre, l'unité de traitement 12, de préférence elle-même informatisée, est préférentiellement associée à un serveur informatique permettant à un utilisateur distant 60 de consulter, par exemple au moyen d'un PC, voire d'un téléphone portable, tout ou partie des informations reçues, traitées, produites et stockées par ladite unité de traitement 12.

Plus généralement, un tel serveur informatique peut héberger, dans un local placé à distance des stations Si et à l'abri de la foudre, à la fois l'unité de collecte 10, l'unité de traitement 12, ainsi qu'une unité de gestion d'accès apte à gérer les connexions et requêtes entrantes d'utilisateurs distants 60 ou encore l'émission d'informations vers lesdits utilisateurs. En particulier, il est envisageable de subordonner l'accès aux données fournies par l'unité de traitement 12 à l'acquittement d'un abonnement spécifique.

De préférence, au moins l'un des modules de communication 3 dispose d'un organe d'émission 52 apte à émettre des signaux en provenance de la station, ou à recevoir des signaux, par radio-fréquence.

Il est remarquable que les signaux sortants peuvent indifféremment correspondre au signal image E1_{MES} de l'intensité du champ électrique, à un signal image du courant de foudre I1_{MES}, ou à tout autre type d'informations concernant par exemple l'état des différents organes de la station.

Les signaux entrants peuvent quant à eux correspondre à des requêtes émises par l'unité de traitement 12, par exemple à la demande d'un utilisateur, afin d'interroger une ou plusieurs stations pour connaître son état de fonctionnement ou la valeur des paramètres qu'elle relève à un instant donné.

Bien entendu, les modules de communication 3, 5 et le réseau de connexions 11 autorisent de préférence un multiplexage des signaux.

De façon particulièrement préférentielle, l'organe d'émission 52 est conçu pour utiliser un réseau de téléphonie mobile, de type GSM. Ainsi, il est envisageable d'implanter des stations dans des zones isolées ou difficiles d'accès, dès lors que celles-ci sont couvertes par une infrastructure de télécommunication existante. L'installation 1 présente à ce titre une grande modularité et permet d'envisager l'ajout quasi illimité de nouvelles stations pour enrichir le réseau et ainsi affiner la précision et la fiabilité des mesures et des prédictions météorologiques associées.

En outre, selon une variante de réalisation particulièrement avantageuse, au moins une station S1, et de préférence chacune des stations Si, dispose d'une alimentation en énergie autonome 61, qui comprend par exemple une batterie 62 rechargée par des cellules photovoltaïques 63.

Avantageusement, un tel agencement autorise non seulement l'installation d'une station dans un lieu isolé dépourvu de réseau de distribution électrique, mais affranchit également, dans une certaine mesure, ladite station, et par conséquent l'installation dans son ensemble, des perturbations d'alimentation provoquées par les phénomènes orageux au niveau des réseaux de distribution.

Bien entendu, la présente invention concerne aussi en tant que telle une station de surveillance d'évènements orageux S1.

Selon l'invention, une telle station comprend un moyen d'évaluation du champ électrique 2 conçu pour fournir un signal image E1_{MES} du champ électrique atmosphérique qui règne au voisinage de ladite station S1. De préférence, la station comprend un module de communication 3 conçu pour rendre accessible ledit signal depuis l'extérieur de ladite première station, ou le transmettre à partir de cette dernière.

De préférence, ladite station de surveillance comporte aussi un moyen de capture de la foudre 22 relié à un conducteur d'écoulement 24 qui est apte à écouler vers la terre de courant de foudre généré par un foudroiement dudit moyen de capture 22.

En d'autres termes, ladite station de surveillance peut également constituer un dispositif de protection contre la foudre de type cage maillée ou paratonnerre.

De préférence, la station de surveillance Si comporte en outre un moyen d'évaluation du courant de foudre 30 apte à évaluer les caractéristiques du courant de foudre qui traverse le conducteur d'écoulement 24 et/ou le moyen de capture 22 lorsque la station est foudroyée.

Selon une variante de réalisation, la station de surveillance peut également comporter un moyen de comptage conçu pour recenser le nombre de foudroiements que subit ladite station.

Avantageusement, un tel moyen de comptage situé au sol garantit que chaque incrément du compteur correspond à un foudroiement effectif de la station, ce qui évite notamment les imprécisions de recensement inhérentes à certains procédés de comptage par radar de l'art antérieur, lesquels sont en effet susceptibles de comptabiliser également les décharges purement atmosphériques, c'est-à-dire des décharges électriques qui circulent entre nuages chargés sans atteindre le sol et qui ne présentent par conséquent pas de réel danger pour les activités humaines.

De ce fait, le recensement des impacts de foudre par une installation 1 conforme à l'invention présente une garantie de certitude quant à la survenance et à la localisation spatiale (en l'occurrence, sur la station concernée) du foudroiement.

De façon particulièrement préférentielle, la station de surveillance possède un conducteur aérien 15 qui est placé au contact de l'atmosphère environnant ladite station S1 et qui forme un élément commun au moyen d'évaluation du champ électrique 2 et au moyen de capture de foudre 22, tel que cela est décrit plus haut.

Ainsi, une station de surveillance conforme à l'invention peut présenter deux modes de fonctionnement distinct :
- un mode de surveillance à vocation préventive selon lequel la station mesure l'intensité et l'évolution du champ électrique ambiant afin de détecter les modifications dudit champ trahissant l'apparition d'un phénomène orageux, et de prédire les évolutions ultérieures probables,
- un mode de constatation consistant à recenser le nombre de foudroiements subis par la station ainsi que les caractéristiques (amplitude, forme d'onde) des courants de foudre correspondants. Un tel mode de constatation peut notamment s'avérer utile pour alerter l'utilisateur sur la nécessité de procéder à une maintenance de la station lorsque celle-ci a subi une quantité et/ou une intensité de foudroiements supérieure à un seuil prédéterminé.

Selon une variante de réalisation particulièrement préférentielle telle qu'illustrée notamment sur les figures 3 et 5, la station de surveillance est intégrée à un paratonnerre à dispositif d'amorçage (PDA) qui présente une pointe de capture 22 et qui dispose d'un moyen d'activation 41 comportant un circuit oscillant 40 apte à appliquer à ladite pointe de capture 22 des impulsions de tension 42 à une fréquence N qui dépend de l'intensité du champ électrique atmosphérique E1 dans lequel est placé ledit moyen de capture 22, tandis que le moyen d'évaluation du champ électrique 2 comprend un instrument de mesure de fréquence 50 apte à mesurer la fréquence desdites impulsions de tension 42.

Bien entendu, la station de surveillance S1 conforme à l'invention peut également comprendre sa propre unité de traitement locale 65 apte à traiter les signaux en provenance du moyen d'évaluation du champ électrique 2 et/ou du moyen d'évaluation du courant de foudre 30, afin de permettre à un utilisateur local, par exemple le propriétaire du bâtiment sur lequel est installée la station S1, de bénéficier des informations recueillies par ladite station.

En particulier, on peut parfaitement envisager que ladite station S1 comprenne un boîtier 66 renfermant de préférence le module de communication 3, l'unité de traitement locale 65 ainsi que tout ou partie du moyen d'évaluation du champ électrique 2 et/ou du moyen d'évaluation du courant de foudre 30, ledit boîtier 66 étant placé dans un endroit de l'édifice 20 accessible à l'utilisateur, tandis que le module de communication 3 est pourvu par exemple d'une prise standard de raccordement de type USB ou RS-232 permettant à l'utilisateur de connecter un PC audit boîtier 66, ou encore de connecter plusieurs stations analogues entre elles pour constituer un micro-réseau local.

Par ailleurs, il est envisageable qu'une station constitue en elle-même, éventuellement sous réserve d'un abonnement spécial, un point d'accès à l'ensemble de l'installation 1 conforme à l'invention, ou tout du moins à une partie des niveaux hiérarchique de ramification du réseau formant ladite installation, et plus particulièrement à l'unité de traitement centralisée 12 qui permet d'accéder aux informations partagées par l'ensemble des stations du réseau.

La présente invention concerne également en tant que tel l'utilisation d'un dispositif de protection contre la foudre 23 d'un édifice 20, et plus précisément d'un dispositif de protection contre les impacts directs de foudre, de type paratonnerre à dispositif d'amorçage (PDA), en tant que moyen d'évaluation du champ électrique atmosphérique régnant au voisinage dudit édifice par fourniture d'un signal image dudit champ électrique atmosphérique sur la base d'une mesure de la fréquence des impulsions de tension délivrées par le moyen d'activation dudit dispositif.

Bien entendu, tel que cela était décrit plus haut, ledit dispositif de protection comprend au moins un moyen de capture destiné à capter un impact direct de foudre, ainsi qu'un moyen d'activation apte à appliquer audit moyen de capture des impulsions de tension et une fréquence qui dépend de l'intensité du champ électrique atmosphérique dans lequel est placé ledit moyen de capture.

La présente invention concerne également un procédé de surveillance d'événements orageux caractérisé en ce qu'il comporte une étape (a) de mise en réseau au cours de laquelle on relie fonctionnellement au moins deux stations S1, S2 distantes l'une de l'autre, aptes à évaluer chacune le champ électrique atmosphérique E1, E2 qui les environne et à en fournir un signal image E1_{MES}, E2_{MES}, à une unité de collecte 10, une étape (b) d'interrogation au cours de laquelle on accède, au moyen de ladite unité de collecte 10, aux signaux images fournis par les stations, et une étape (c) de traitement au cours de laquelle on analyse lesdits signaux E1_{MES}, E2_{MES}, afin de déterminer l'apparition et/ou l'évolution de conditions orageuses dans la zone géographique 14 qui correspond aux sites d'implantation desdites stations.

De façon particulièrement préférentielle, dans le procédé de surveillance conforme à l'invention, lors de l'étape (b) d'interrogation, le transfert des signaux s'effectue au moins en partie par radio-fréquence.

En particulier, il est envisageable que chaque station émette par radio-fréquence des signaux captés par un récepteur lui-même raccordé par un réseau câblé à l'unité de collecte 10.

La présente invention concerne enfin un procédé de mesure d'un champ électrique atmosphérique qui peut notamment, mais pas exclusivement, être mis en oeuvre au sein d'une installation comprenant une pluralité de stations S1...Sn formant un réseau de surveillance.

Selon l'invention, ledit procédé comprend une étape (i) d'installation au cours de laquelle on installe une station S1 pourvue d'un conducteur aérien 15 que l'on place au contact de l'atmosphère qui environne ladite station, une étape (ii) de raccordement au cours de laquelle on relie électriquement audit conducteur aérien 15 un circuit électronique oscillant 40 dont la fréquence d'oscillation dépend de la différence de potentiel V_{P} entre ledit conducteur aérien 15 et un potentiel de référence, tel que celui d'une prise de terre, puis une étape (iii) de mesure au cours de laquelle on mesure la fréquence d'oscillation N dudit circuit oscillant 40, et enfin une étape (iv) de corrélation au cours de laquelle on évalue, selon une loi théorique ou empirique prédéterminée, l'intensité E1_{MES} du champ électrique E1 en fonction de la valeur mesurée de fréquence d'oscillation N.

De façon particulièrement préférentielle, un tel procédé de mesure de champ électrique est mis en oeuvre au sein d'un dispositif de protection contre la foudre 23 de type paratonnerre à dispositif d'amorçage qui présente un moyen de capture 22 du genre pointe, et qui dispose d'un moyen d'activation oscillant 41 apte à appliquer audit moyen de capture 22 des impulsions de tension 42 à une fréquence N qui dépend de l'intensité du champ électrique atmosphérique dans lequel est placé ledit moyen de capture, de telle sorte que l'étape (iii) s'effectue en mesurant la fréquence N desdites impulsions de tension 42.

Bien entendu, la présente invention concerne également un ou plusieurs programmes informatiques, ou moyens de code de programme informatique, qui permettent, lorsqu'ils sont exécutés sur un ordinateur au sein d'une station et/ou d'une installation conformes à l'invention, la réalisation de diverses fonctions décrites ci-dessus, et notamment : l'évaluation du champ électrique ambiant par corrélation de la fréquence N du circuit oscillant 40 et/ou du potentiel V_{P} sur la base d'un modèle prédéterminé, par exemple par comparaison à des courbes expérimentales, la collecte par l'unité de collecte 10 des signaux issus des stations, le traitement des données correspondantes par l'unité de traitement 12, et plus particulièrement l'horodatage, le stockage et l'analyse statistique desdites données ainsi que la réalisation de représentations graphiques spécifiques (cartographies) de l'état et/ou de l'évolution des conditions orageuses dans une zone géographique considérée (portant mention explicite ou illustrative de l'intensité du champ électrique ambiant, du nombre des foudroiements et/ou de l'intensité de ces derniers), l'édition et la diffusion de bulletins météorologiques correspondants, notamment en cas d'alerte, ainsi que la gestion de l'accès, par le biais de serveurs, des utilisateurs 60 aux informations détenues par ladite unité de traitement 12.

Naturellement, l'invention s'étend également à la mise en oeuvre de tels programmes informatiques sur un support lisible par un ordinateur ainsi qu'au(x) support(s) pouvant être lu(s) par un ordinateur et sur le(s)quel(s) est enregistré l'un ou l'autre desdits programmes.

Il est remarquable que les procédés de surveillance d'évènements orageux et de mesure d'un champ électrique conformes à l'invention peuvent avantageusement être mis en oeuvre sur des dispositifs de protection contre la foudre déjà présents sur des édifices 20, par simple adjonction d'un moyen d'évaluation du champ électrique approprié.

Ainsi, il est envisageable de réaliser à moindre frais une installation 1 conforme à l'invention, d'une part en convertissant les paratonnerres à dispositif d'amorçage existants en stations de mesure apte à relever les valeurs de champ électrique ambiant dans leur zone d'implantation, et d'autre part en exploitant les infrastructures de réseaux de télécommunication existants pour interconnecter lesdites stations afin d'échanger et collecter les données mesurées par elles.

Ainsi, les stations et plus généralement l'installation conforme à l'invention permettent de réaliser, grâce à une multiplication des points de mesure conjuguée à une mise en commun des mesures effectuées, une surveillance en temps réel ainsi que des prévisions concernant l'apparition et l'évolution de conditions orageuses dans la zone géographique couverte par les stations.

Bien entendu, la présente invention n'est pas limitée aux exemples et au mode de réalisation décrits et représentés, mais elle est susceptible de nombreuses variantes accessibles à l'homme de l'art.

## Revendications

1. Station de surveillance d'événements orageux (S1), comprenant un moyen d'évaluation du champ électrique (2) conçu pour fournir un signal image (E1_{MES}) du champ électrique atmosphérique (E1) qui règne au voisinage de ladite station (S1),
dans laquelle ledit moyen d'évaluation du champ électrique (2) est pourvu d'un conducteur aérien (15) placé au contact de l'atmosphère qui environne la station (S1), le conducteur aérien (15) formant un moyen de capture de foudre (22) relié à un conducteur d'écoulement (24) apte à écouler vers la terre le courant de foudre généré par un foudroiement dudit moyen de capture.

2. Station de surveillance selon la revendication 1, comprenant un module de communication (3) conçu pour rendre accessible ledit signal (E1_{MES}) depuis l'extérieur de ladite station, ou le transmettre à partir de cette dernière.

3. Station de surveillance selon la revendication 1 ou 2, comportant un moyen d'évaluation du courant de foudre (30) apte à évaluer les caractéristiques du courant de foudre qui traverse le conducteur d'écoulement (24) et/ou le moyen de capture (22) lorsque la station (S1) est foudroyée.

4. Station de surveillance selon l'une quelconque des revendications 1 à 3, comportant un moyen de comptage conçu pour recenser le nombre de foudroiements que subit ladite station.

5. Station de surveillance selon l'une quelconque des revendications 1 à 4, dans laquelle ledit au moins un moyen d'évaluation du champ électrique (2) est pourvu d'un instrument de mesure de tension (16) apte à évaluer le potentiel électrique (Vp) auquel se trouve ledit conducteur aérien (15).

6. Station de surveillance selon l'une quelconque des revendications 1 à 5, dans laquelle le moyen de capture de foudre (22) appartient à un dispositif de protection (23) d'un édifice (20) contre la foudre, ledit dispositif de protection (23) étant destiné à capter des impacts directs de foudre au niveau dudit moyen de capture (22) puis à acheminer depuis ledit moyens de capture (22) vers la terre, au moyen d'un ou plusieurs conducteurs d'écoulement (24), le courant de foudre résultant desdits impacts.

7. Station de surveillance selon la revendication 6, dans laquelle le dispositif de protection est un paratonnerre.

8. Station de surveillance selon l'une quelconque des revendications 1 à 7, dans laquelle le moyen d'évaluation du champ électrique (3) comprend un circuit électronique oscillant (40) dont la fréquence d'oscillation (N) dépend de l'intensité du champ électrique atmosphérique (E1) auquel est soumise la station (S1) correspondante.

9. Station de surveillance selon la revendication 8 et la revendication 6 ou 7, dans laquelle le circuit électronique oscillant (40) constitue un moyen d'activation (41) du dispositif de protection contre la foudre (23) apte à générer des impulsions de tension (42) et à les appliquer au conducteur aérien (15) afin d'augmenter, en valeur absolue, le potentiel de ce dernier et ainsi améliorer le pouvoir de capture dudit dispositif de protection contre la foudre (23).

10. Station de surveillance selon la revendication 8 ou 9, dans laquelle le moyen d'évaluation du champ électrique (2) comprend un instrument de mesure de fréquence (50) apte à mesurer la fréquence d'oscillation (N) du circuit électronique oscillant (40).

11. Station de surveillance selon les revendications 5 ou 10, dans laquelle le moyen d'évaluation du champ électrique (2) comprend un module de corrélation (51) apte à associer, aux valeurs mesurées de potentiel du conducteur aérien (Vp) et/ou de fréquence d'oscillation (N) du circuit oscillant (40), une valeur estimée de champ électrique qui forme le signal image (E1_{MES}).

12. Station de surveillance selon l'une des revendications 1 à 7, laquelle est intégrée à un paratonnerre à dispositif d'amorçage qui présente un moyen de capture de foudre (22) du genre pointe et qui dispose d'un moyen d'activation (41) comportant un circuit oscillant (40) apte à appliquer à ladite pointe de capture (22) des impulsions de tension (42) à une fréquence (N) qui dépend de l'intensité du champ électrique atmosphérique (E1) dans lequel est placé ladite pointe de capture (22), le moyen d'évaluation du champ électrique (2) comprenant un instrument de mesure de fréquence (50) apte à mesurer la fréquence desdites impulsions de tension (42).

13. Station de surveillance selon l'une quelconque des revendications 1 à 12, disposant d'une alimentation en énergie autonome (61), comprenant par exemple une batterie (62) rechargée par des cellules photovoltaïques (63).

14. Installation (1) de surveillance d'événements orageux, comprenant :
- une première station (S1) comportant d'une part un premier moyen d'évaluation du champ électrique (2) conçu pour fournir un premier signal image (E1_{MES}) du champ électrique atmosphérique (E1) qui règne au voisinage de ladite première station, et d'autre part un premier module de communication (3) conçu pour rendre accessible ledit premier signal (E1_{MES}) depuis l'extérieur de ladite première station (S1), ou le transmettre à partir de cette dernière,
- au moins une seconde station (S2), distante de la première station (S1), comportant d'une part un second moyen d'évaluation du champ électrique (4) conçu pour fournir un second signal image (E2_{MES}) du champ électrique atmosphérique (E2) qui règne au voisinage de ladite seconde station (S2), et d'autre part un second module de communication (5) conçu pour rendre accessible ledit second signal (E2_{MES}) depuis l'extérieur de ladite seconde station, ou le transmettre à partir de cette dernière,
- une unité de collecte (10), distante de la première et/ou de la seconde station (S1, S2), ladite unité de collecte (10) étant connectée d'une part au premier module de communication (3) et d'autre part au second module de communication (5) au moyen d'un réseau de connexions (11) de sorte à pouvoir accéder au premier et au second signal (E1_{MES}, E2_{MES}) ou recevoir ces derniers,
- une unité de traitement (12), associée fonctionnellement à l'unité de collecte (10) et apte à traiter le premier et le second signal (E1_{MES}, E2_{MES}) en vue d'apprécier l'apparition et/ou l'évolution de conditions atmosphériques orageuses dans la zone géographique (14) qui correspond sensiblement aux sites d'implantation des première et seconde stations (S1, S2),
dans laquelle installation au moins une desdites stations est selon l'une quelconque des revendications 1 à 13.

15. Installation de surveillance selon la revendication 14, comportant une pluralité de stations (S1, S2..., Sn) implantées à distance les unes des autres sur une zone géographique (14) donnée, chacune desdites stations (S1, S2..., Sn) étant reliée à l'unité de collecte (10) afin de former un maillage de ladite zone géographique (14).

16. Installation selon la revendication 14 ou 15, dans laquelle l'unité de traitement (12) comprend un moyen de mesure du temps, de type horloge, permettant d'horodater les signaux reçus des stations.

17. Installation selon la revendication 16, dans laquelle l'unité de traitement (12) comprend un module de suivi apte à comparer entre elles différentes valeurs estimées de champ électrique (E1_{MES}) reçues successivement dans le temps en provenance d'une même station (S1), afin de déterminer l'évolution des conditions orageuses dans la zone géographique concernée, et plus précisément d'estimer si un orage approche ou s'éloigne de ladite station (S 1).

18. Installation selon l'une quelconque des revendications 14 à 17, dans laquelle au moins l'un des modules de communication (3), ainsi que l'unité de collecte (10) disposent de moyens informatiques permettant la transmission des signaux entre ledit module de communication et ladite unité de collecte par un réseau informatique de type Internet.

19. Installation selon l'une des revendications 14 à 18, dans laquelle l'unité de traitement (12) est associée à un serveur informatique permettant à un utilisateur distant (60) de consulter tout ou partie des informations reçues, traitées, produites et stockées par ladite unité de traitement.

20. Installation selon l'une des revendications 14 à 19, dans laquelle au moins l'un des modules de communication (3) dispose d'un organe d'émission (52) apte à émettre des signaux en provenance de la station (S1) ou à recevoir des signaux par radio-fréquence.

21. Installation selon la revendication 20, dans laquelle l'organe d'émission (52) est conçu pour utiliser un réseau de téléphonie mobile, de type GSM.

22. Utilisation d'un dispositif de protection (23) d'un édifice (20) contre la foudre, de type paratonnerre à dispositif d'amorçage (PDA), en tant que moyen dévaluation du champ électrique atmosphérique (E1) régnant au voisinage dudit édifice (20), par fourniture d'un signal image (E1_{MES}) dudit champ électrique atmosphérique (E1) sur la base d'une mesure de la fréquence des impulsions de tension (42) délivrées par un moyen d'activation (41) dudit dispositif de protection (23).

23. Procédé de surveillance d'évènements orageux, comportant une étape (a) de mise en réseau au cours de laquelle on relie fonctionnellement au moins deux stations (S1, S2) distantes l'une de l'autre, aptes à évaluer chacune le champ électrique atmosphérique (E1, E2) qui les environne et à en fournir un signal image (E1_{MES}, E2_{MES}) à une unité de collecte (10), une étape (b) d'interrogation au cours de laquelle on accède, au moyen de ladite unité de collecte (10), aux signaux images (E1_{MES}, E2_{MES}) fournis par les stations et une étape (c) de traitement au cours de laquelle on analyse lesdits signaux (E1_{MES}, E2_{MES}) afin de déterminer l'apparition et/ou l'évolution de conditions orageuses dans la zone géographique (14) qui correspond aux sites d'implantation desdites stations,
dans lequel au moins l'une des deux stations est selon l'une quelconque des revendications 1 à 13.

24. Procédé selon la revendication 23, dans lequel, lors de l'étape (b) d'interrogation, le transfert des signaux (E1_{MES}, E2_{MES}) s'effectue au moins en partie par radio-fréquence.

25. Procédé de mesure d'un champ électrique atmosphérique, comprenant une étape (i) d'installation au cours de laquelle on installe une station (S1) pourvue d'un conducteur aérien (15) que l'on place au contact de l'atmosphère qui environne ladite station, puis une étape (ii) de raccordement au cours de laquelle on relie électriquement audit conducteur aérien (15) un circuit électronique oscillant (40) dont la fréquence d'oscillation (N) dépend de la différence de potentiel entre ledit conducteur aérien (15) et un potentiel de référence, tel que celui d'une prise de terre, puis une étape (iii) de mesure au cours de laquelle on mesure la fréquence d'oscillation (N) dudit circuit oscillant (40), et enfin une étape (iv) de corrélation au cours de laquelle on évalue, selon une loi théorique ou empirique prédéterminée, l'intensité (E1_{MES}) du champ électrique en fonction de la valeur mesurée de fréquence d'oscillation (N), lequel procédé est mis en oeuvre au sein d'un dispositif de protection contre la foudre (23) de type paratonnerre à dispositif d'amorçage qui présente un moyen de capture de foudre (22) du genre pointe et qui dispose d'un moyen d'activation (41) oscillant apte à appliquer audit moyen de capture (22) des impulsions de tension (42) à une fréquence (N) qui dépend de l'intensité du champ électrique atmosphérique (E1) dans lequel est placé ledit moyen de capture (22), de telle sorte que l'étape (iii) s'effectue en mesurant la fréquence (N) desdites impulsions de tension.
